# EUROPÄISCHE PATENTSCHRIFT

(11) **EP 1 618 787 B1**
(45) Veröffentlichungstag und Bekanntmachung des Hinweises auf die Patenterteilung: **08.09.2010**
(21) Anmeldenummer: 05015913.6
(22) Anmeldetag: 21.07.2005
(51) Int. Cl.: A21B 1/14, A21B 3/07

(54) **Backofen mit Steinplattenwagen**
Baking oven with stone-disk trolley
Four de cuisson avec chariot de dalles de pierre

(30) Priorität: 22.07.2004 DE 202004011473 U
(43) Veröffentlichungstag der Anmeldung: 25.01.2006
(73) Patentinhaber: Heuft Besitzgesellschaft GmbH & Co. KG, 56745 Bell/Eifel (DE)
(72) Erfinder: Heuft, Thomas, 56072 Koblenz (DE)
(74) Vertreter: Hess, Peter K. G.

(56) Entgegenhaltungen:
- BE-A- 556 542
- BE-A- 562 889
- DE-A- 10 232 997
- DE-A1- 3 815 243
- DE-A1- 19 903 048
- DE-U- 7 836 794
- DE-U1- 9 001 757
- FR-A- 2 410 437
- FR-A- 2 553 626
- FR-A1- 2 547 485
- "Die flexibele Alternative" BROT UND BACKWAREN, März 2005 (2005-03), XP007900619

## Beschreibung

### 1. Technisches Gebiet

Die vorliegende Erfindung betrifft ein Backofensystem zum Backen von Backwaren, insbesondere ein Backofensystem mit einem Radiatoren-Wagenofen für Bäckereien.

### 2. Stand der Technik

Im Stand der Technik werden Backöfen, die mit Rollwagen beschickt werden, als Wagenofen bezeichnet. Grundsätzlich sind zwei verschiedene Arten von Wagenöfen bekannt. Zum einen gibt es sogenannte Stikkenöfen in denen die Backwaren durch zirkulierende Heißluft gebacken werden. Solche Wagenöfen backen hauptsächlich nach dem Konvektionsprinzip. Zum anderen sind sogenannte Radiatoren-Wagenöfen bekannt, bei denen plattenförmige Heizelemente - sogenannte Radiatoren - in den Backraum ragen. Solche Backöfen backen hauptsächlich durch Wärmestrahlung und Wärmeleitung. Radiatoren-Wagenöfen sind aus der DE 102 32 997 A1 bekannt.

Bei beiden Backofentypen befinden sich die zu backenden Backwaren auf Backblechen oder in Backformen, die etagenförmig auf einem rollbaren Rollwagen angeordnet sind. Zum Backen der Backwaren werden zunächst die Teiglinge auf die einzelnen Backbleche gelegt. Diese Backbleche werden dann in den Rollwagen eingeschoben, welcher dann zum eigentlichen Backen in den Backraum des Wagenofens eingeschoben wird. Nach dem Schließen der Backofentür wird das Backprogramm gestartet. Der Backvorgang läuft nun programmgesteuert ab. Nach dessen Beendigung kann zur Entnahme der fertigen Backwaren die Backraumtür geöffnet, und der oder die Rollwagen können aus dem Wagenofen entnommen werden. Die Backwaren verbleiben, zum Abkühlen, üblicherweise auf dem Rollwagen.

Da die Backwaren immer auf dem Rollwagen verbleiben, bieten sich Wagenöfen daher für Bäckereibetriebe an, die auf geringer Standfläche einen möglichst hohen Durchsatz an Backwaren erzielen wollen.

In Abgrenzung zu den oben genannten Wagenöfen sind Herdöfen mit Backflächen aus Steinplatten bekannt, mit denen das Backgut direkt auf den Steinplatten gebacken werden kann. Für bestimmte Backwaren ergibt sich dadurch eine im Vergleich zu Wagenöfen, insbesondere Stikkenöfen, eine verbesserte Backqualität. Insbesondere kann die Kruste der Backwaren wesentlich dicker werden, die Backwaren bleiben länger backfrisch und knusprig. Dies gilt besonders für Brötchen oder Brot.

Um die Backqualität eines Stikkenofens zu verbessern wird in der DE 201 01 501 U1 vorgeschlagen, zusätzlich zu dem Backwagen mit dem Backgut einen Wärmespeicherwagen mit Wärmespeicherplatten aus Metall, Stein oder Schamotte in einen Stikkenofen einzubringen, um dessen Wärmekapazität zu erhöhen. Das Backgut befindet sich hierbei auf gewöhnlichen Backblechen, die jeweils oberhalb einer Wärmerspeicherplatte angeordnet ist. Da zwischen den Backblechen und den Wärmespeicherplatten ein Luftraum verbleibt, erfolgt die Wärmeübertragung von der Wärmespeicherplatte auf das Backblech und damit auf das Backgut mittels Strahlungswärme. Stikkenöfen in die Steinbackplatten eingebracht werden sind auch in der DE 78 36 794 U1 und der FR 2 410 437 bekannt.

Bei den oben angesprochenen Radiatoren-Wagenöfen ergibt sich durch in den Backraum hineinragenden Radiatoren das Problem einer zu geringen Wärmekapazität des Ofens nicht. Die hier verwendeten Radiatoren werden entweder mit heißem Wasserdampf, Heizgasen oder Thermoöl beheizt. Falls Thermoöl als Wärmeträger benutzt wird, wird dieses üblicherweise mittels eines extern angeordneten öl- oder gasbetriebenen Heizaggregat aufgeheizt und drucklos durch ein geschlossenes Rohrsystem gepumpt. Die öldurchflossen Radiatoren erhitzen den Backraum und geben die Wärme an die Backwaren weiter.

Die Radiatoren ragen horizontal in den Backraum hinein und definieren dadurch einzelne Backetagen eines Radiatoren-Wagenofens. Beim Einschieben eines Rollwagens wird über jeden Radiator ein Backblech oder mehrere Backformen geschoben. Dadurch überträgt sich die Wärme dieses Radiators per Wärmestrahlung auf das Backblech und die Backformen und auf die darauf oder darin befindlichen Backwaren. Gleichzeitig wird über den jeweils über den Backwaren angeordneten Radiator die Wärme per Wärmestrahlung auf die darunter befindlichen Backwaren übertragen. Damit ergeben sich verglichen mit Stikkenöfen eine wesentlich verbesserte Qualität der Backwaren. Die besondere Qualität eines Steinbackofens, insbesondere bei großvolumigen Backwaren, konnte bislang auch mit Radiatoren-Wagenöfen nicht erzielt werden.

Aus der FR 2 553 626 ist ein Radiatoren-Backofen bekannt bei dem mittels eines Transportwagens Steinplatten direkt auf die Radiatoren des Ofens abgelegt werden können. Nach dem Ablegen der Steinplatten wird der Transportwagen wieder aus dem Ofen herausgezogen.

BE 562 889 offenbart ein Backofensystem mit horizontal freitragenden in den Backraum hineinragenden Radiatoren und ein Steinplattenwagen. Die Steinplatten werden mittels Heißdampf oder Heißluft durchströmter Röhren erwärmt. Weiterhin sind die Steinplatten zusätzlich mit elektrischen Heizelementen ausgestatten. Diese Heizelemente sorgen für ein schnelles Aufheizen der Steinplatten.

Somit ergibt sich aus dem Stand der Technik, das der vorliegenden Erfindung zugrundeliegende Problem, einen Radiatoren-Wagenofen bereitzustellen, der eine gegenüber dem Stand der Technik verbesserte Backqualität, insbesondere für großvolumige Backwaren, aufweist.

### 3. Zusammenfassung der Erfindung

Das oben genannte Problem wird gelöst durch **ein Backofensystem aufweisend** einen mit Thermoöl beheizten Radiatoren-Backofen mit horizontal freitragend in den Backraum hineinragenden öldurchflossenen Radiatoren und mindestens einen Steinplattenwagen wobei der Steinplattenwagen einen in den Backraum des Radiatoren-Backofens einfahrbaren Rahmen aufweist und eine Mehrzahl von horizontal angeordneten Steinplatten zur unmittelbaren Aufnahme des Backguts, die in dem Rahmen befestigt sind, wobei die Steinplatten unmittelbar über den öldurchflossenen Radiatoren angeordnet sind, wenn der Wagen während des Backvorgangs in den Backraum des Radiatoren-Backofens eingefahren ist, wobei die Steinplatten auf solch einer Höhe im Rahmen angeordnet sind, dass sie sich mit einem geringen Abstand, von kleiner oder gleich 10mm, über den Radiatoren befinden.

Der Steinplattenwagen macht aus einem gewöhnlichen Radiatoren-Backofen einen Steinbackofen, mit dem Backwaren von höchster Qualität hergestellt werden können. Dabei wird das Backgut erfindungsgemäß direkt auf der Steinplatte gebacken, was durch die direkte Wärmeleitung auf das Backgut zu höchster Backqualität führt. Die Backwaren bleiben daher länger frisch und weisen eine dicke, knusprige Kruste auf.

Die Radiatoren erwärmen die Steinplatten, die unmittelbar über ihnen angeordnet sind schnell und gleichmäßig. Dies gilt sowohl für jede Steinplatte selbst, wie auch für die Gleichmäßigkeit der Temperatur der Steinplatten untereinander. Somit wird über alle Backetagen ein gleichmäßiges Backergebnis erzielt.

Durch ein einfaches Einbringen des Steinplattenwagens in einen konventionellen Radiatoren-Backofen, kann dieser innerhalb Sekunden zu einem Steinbackofen umgerüstet werden, wenn dies für bestimmte Backaufgaben gewünscht wird. Für kleinere Betriebe kann dadurch die Anschaffung eines separaten Steinbackofens komplett entfallen. Andere Betriebe können dadurch schnell und kostengünstig ihre Steinbackkapazität vergrößern. Insgesamt ergibt sich dadurch eine bessere Auslastung der Backofenanlage.

Dadurch, dass die Steinplatten auf solch einer Höhe im Rahmen angeordnet sind, dass sie sich mit einem geringen Abstand, von kleiner oder gleich 10mm über den Radiatoren befinden, erfolgt die Erwärmung der Steinplatten durch die intensive Wärmestrahlung besonders schnell und die Wärmeübertragung auf das Backgut erfolgt besonders vorteilhaft. Dabei ist die direkte Wärmeleitung über die Steinplatte auf das Backgut (Unterhitze) auf die abgestrahlte Wärme von den über dem Backgut befindlichen Radiatoren (Oberhitze) angepasst.

Bevorzugt weist der Steinplattenwagen weiterhin eine Kupplung, zum Ankuppeln von weiteren Wagen, insbesondere eines Abzieherwagens und eines Ausbackwagens, auf. Durch die Kupplung kann ein weiterer Wagen in einer definierten Art und Weise an dem Steinplattenwagen ausgerichtet und/oder befestigt werden. Dies erleichtert das Einbringen und Herausholen des Backgutes, da der Steinplattenwagen im Backofen verbleibt und beispielsweise Abzieherwagen, die die Teiglinge tragen, und Ausbackwagen, auf die die gebackenen Backwaren gezogen werden, für den Beschickungs- und Entnahmevorgang ausgerichtet herangefahren oder fest angekuppelt werden können.

Die o.g. Probleme werden auch gelöst durch ein Backofensystem aufweisend einen Radiatoren-Backofen mit horizontal in den Backraum hineinragenden Radiatoren und mindestens einem Steinplattenwagen wie er oben definiert wurde. Der konventionelle Radiatoren-Backofen wird zusammen mit dem Steinplattenwagen, wie er oben beschrieben wurde, zu einem modularen Backofensystem, das es ermöglich sowohl mit Backwagen als auch direkt auf einer Steinplatte zu backen.

In einer bevorzugten Ausführungsform weist das Backofensystem weiterhin mindestens einen Abzieherwagen zum Ablegen der Teiglinge auf die Steinplatten des Steinplattenwagens auf. Durch einen auf den Steinplattenwagen angepassten Abzieherwagen können die Teiglinge von einer Etage des Abzieherwagens auf die entsprechende Steinplatte geschoben werden.

Bevorzugt weist der Abzieherwagen einen fahrbaren Rahmen und eine Mehrzahl von horizontal angeordneten Abziehapparate auf, wobei jeder Abziehapparat einzeln oder mit anderen Abziehapparaten zusammen horizontal aus dem Rahmen herausbewegbar ist und ein Förderband aufweist, um Teiglinge direkt auf die Steinplatten des Steinplattenwagens abzulegen. Wird ein Abzieherwagen mit solchen Abziehapparaten verwendet, können die Teiglinge besonders schnell und mit dem gewünschten Abstand auf den Steinplatten abgelegt werden.

Bevorzugt weist der Abzieherwagen weiterhin eine Kupplung auf, um den Abzieherwagen fluchtend an den Steinplattenwagen heranzufahren und/oder mit ihm zu verrasten. Damit wird sichergestellt, dass sich der Abzieherwagen während des Beschickungsvorgangs nicht verschiebt und somit die Teiglinge zuverlässig und schnell auf den Steinplatten abgelegt werden können.

In einer weiteren bevorzugten Ausführungsform weist das Backofensystem weiterhin mindestens einen Ausbackwagen zum Aufnehmen des gebackenen Backgutes auf, wobei der Ausbackwagen eine Kupplung aufweist, um den Ausbackwagen fluchtend an den Steinplattenwagen heranzufahren und/oder mit ihm zu verrasten. Damit wird verhindert, dass sich der Ausbackwagen, auf den die gebackenen Backwaren gezogen werden, beim Entnahmevorgang ungewollt verschiebt und die Backwaren ggf. zu Boden fallen.

Weitere bevorzugte Ausführungsformen werden durch die abhängigen Ansprüche definiert.

### 4. Kurze Beschreibung der Zeichnung

Im Folgenden werden die bevorzugten Ausführungsformen der vorliegenden Erfindung und unter Bezugnahme auf die Zeichnung beschrieben. Darin zeigt:
- Figur 1:: eine seitliche Querschnittsansicht eines Radiatoren-Backofens mit thermoölbeheizten Radiatoren, gemäß dem Stand der Technik;
- Figur 2A:: eine horizontale Querschnittsansicht durch ein Backofensystem mit einem noch nicht in den Backraum eingefahrenen Steinplattenwagen gemäß der vorliegenden Erfindung;
- Figur 2B:: eine horizontale Querschnittsansicht durch ein erfindungsgemäßes Backofensystem mit eingefahrenem Steinplattenwagen und Abzieher- wagen;
- Figur 2C:: eine horizontale Querschnittsansicht durch ein erfindungsgemäßes Backofensystem beim Einbringen der Teiglinge;
- Figur 2D:: eine horizontale Querschnittsansicht durch ein erfindungsgemäßes Backofensystem mit eingefahrenem Steinplattenwagen und Ausback- wagen, beim Entnehmen des Backgutes;
- Figur 3:: eine Seitenansicht eines Abzieherwagens mit einem ausgefahrenen Ab- ziehapparat; und
- Figur 4:: eine schematische Querschnittsansicht durch einen Abziehapparat eines Abzieherwagens.

### 5. Detaillierte Beschreibung der bevorzugten Ausführungsformen

Bevorzugte Ausführungsformen des erfindungsgemäßen Backofensystems werden im Folgenden mit Hilfe der Figuren erläutert.

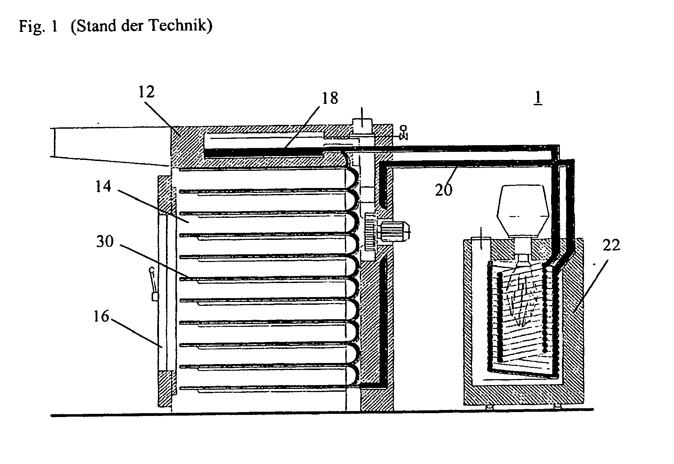

Fig. 1 zeigt einen thermoölbeheizten Wagenofen 1 gemäß dem Stand der Technik mit einem Heizaggregat 22. Der Wagenofen 1 besteht aus einem Gehäuse 12, einem Backraum 14, horizontal in den Backraum 14 hineinragende Radiatoren 30 und einer Backraumtür 16. Der Wagenofen 1 wird über die thermoöldurchflossenen Radiatoren 30 beheizt. Das Thermoöl 18 (hier dunkel dargestellt) zirkuliert in einem Thermoölkreislauf 20 und wird durch das Heizaggregat 22 auf eine gewünschte Temperatur aufgeheizt. Dann fliest es drucklos durch den Thermoölkreislauf 20 und durch die Heizkanäle jedes Radiators 30. Dabei gibt das Thermoöl Wärme über die Radiatoren 30 an den Backraum 14 ab.

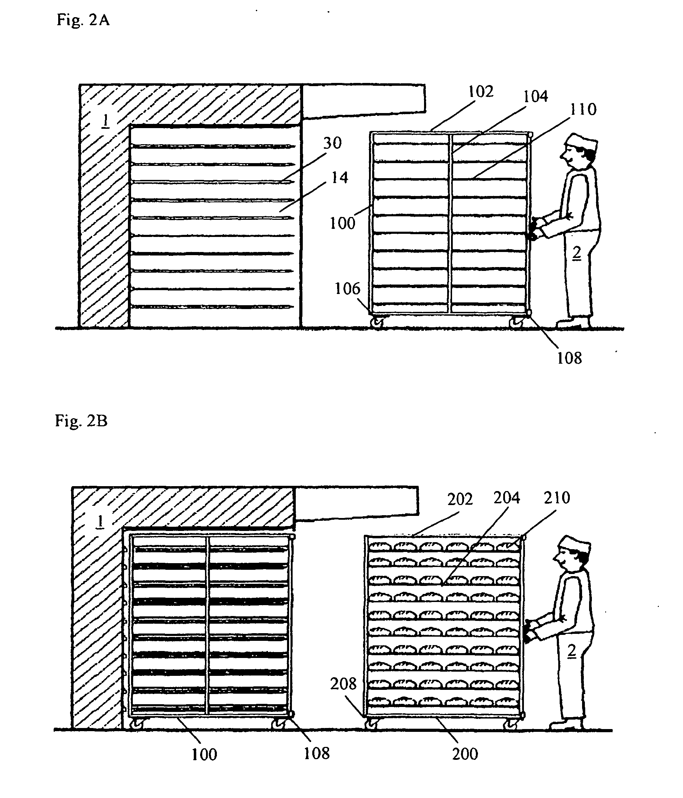

Die Figuren 2A - 2B verdeutlichen den Arbeitsablauf beim Backen mit einem erfindungsgemäßen Backofensystem mit Steinplattenwagen 100. Sie zeigen einen thermoölbeheizten Radiatoren-Backofen 1, hier zur Verdeutlichung in einer Querschnittsansicht. Man erkennt die in den Backraum 14 horizontal hineinragenden flächigen Radiatoren 30. Die Radiatoren sind an der Rückwand des Backraumes 14 befestigt und ragen freitragend in den Backraum 14 hinein, wobei sie seitlich einen Abstand zwischen den seitlichen Innenwänden des Backraums 14 und den seitlichen Kanten der Radiatoren 30 definieren. Der Abstand ist notwendig, damit ein Backwagen oder der Steinplattenwagen 100 eingefahren werden kann.

Der Steinplattenwagen 100 besteht aus einem ihn umgebenden Rahmen 102, der bevorzugt aus Stahlrohren oder Stahlprofilen besteht. In dem Rahmen 102 sind etagenförmig und horizontal Steinplatten 110 angeordnet. Die Steinplatten 110 sind so angeordnet, dass sie sich jeweils mit einem Abstand von ca. 10mm unmittelbar über den Radiatoren 30 befinden, wenn der Steinplattenwagen 100 in den Backraum 14 des Radiatoren-Backofens eingefahren ist. Bevorzugt haben die Steinplatten 110 zueinander einen regelmäßigen Abstand, der durch den Abstand der Radiatoren 30 bestimmt wird.

Bevorzugt sind die Steinplatten 110 auf solch einer Höhe im Rahmen 102 angeordnet, dass sie sich mit einem geringen Abstand, bevorzugt ca. 10mm über den Radiatoren befinden. Dadurch erfolgt die Erwärmung der Steinplatten 110 durch die intensive Wärmestrahlung besonders schnell und die Wärmeübertragung auf das Backgut 210 erfolgt besonders vorteilhaft. Dabei ist die direkte Wärmeleitung über die Steinplatte auf das Backgut (Unterhitze) auf die abgestrahlte Wärme von den über dem Backgut befindlichen Radiatoren (Oberhitze) angepasst. Weiterhin reagieren dann die Steinplatten schnell auf eventuelle Temperaturveränderungen des Backprogramms, das über die Temperatur des Thermoöls geregelt wird.

Die Steinplatten 110 bestehen aus einem wärmebeständigen und temperaturwechselbeständigen Natur- oder Kunststein, wie beispielsweise Kunststeine auf Zementbasis. Sie weisen eine Oberfläche auf, die dazu geeignet ist, dass die Backwaren direkt auf den Steinplatten gebacken werden können. Bei den Steinplatten 110 kann es sich um eine durchgehende Steinplatte für jede Etage oder auch um eine Mehrzahl von Teilplatten aufweisen, die zusammen eine Steinplatte 110 einer Etage bilden.

Wegen des hohen Gewichts der Steinplatten 110 kann es notwendig sein Mittelstreben 104 am Rahmen 102 vorzusehen, die die Steinplatten 110 in der Mitte stützen. Der Steinplattenwagen 100 ist mit Laufrollen 106 ausgerüstet, damit der Umrüstvorgang, wie er in Fig. 2A dargestellt ist, schnell und bequem durchgeführt werden kann. Dazu muss der Bediener 2 lediglich den Steinplattenwagen 100 in den Radiatoren-Ofen 1 einbringen.

Nach einer Aufheizzeit von ca. 20 Minuten kann das gewünschte Backprogramm gewählt werden und ein Abzieherwagen 200 mit den Teiglingen 210 herangefahren werden, wie dies in Fig. 2B dargestellt ist. Der Abzieherwagen 200 weist ebenfalls einen Rahmen 202 und einzelne Etagen 204 auf, die in Ihrer Höhe an die Höhe der Steinplatten 110 angepasst sind. Auf den Etagen 204 befinden sich die noch rohen Teiglinge 210.

Zum Einbringen und Ablegen der Teiglinge 210 auf den Steinplatten 110 wird der Abzieherwagen 200 mittels einer Kupplung 208 mit dem Steinplattenwagen 100 verrastet. Der Steinplattenwagen 100 weist zu diesem Zweck eine entsprechende Kupplung 108 auf.

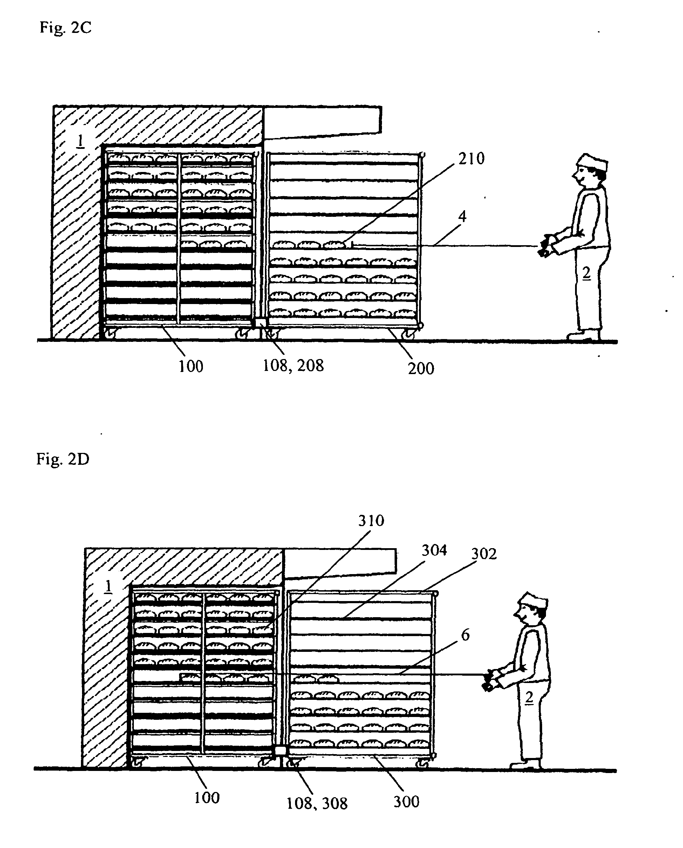

Dann kann der Bediener 2, wie in Fig. 2C dargestellt, mittels eines Schiebers 4 die Teiglinge 210 auf die Steinplatten 110 schieben.

Nachdem der leere Abzieherwagen 200 weggefahren und die Tür 16 des Backofens 1 geschlossen wurde, kann das gewünschte Backprogramm gestartet werden.

Ist das Backprogramm abgelaufen, können die fertig gebackenen Backwaren 310 entnommen werden, wie in Fig. 2D dargestellt. Dazu wird die Tür 16 des Backofens 1 geöffnet und ein Ausbackwagen 300 an dem Steinplattenwagen 100 arretiert. Dazu weist der Ausbackwagen ebenfalls eine Kupplung 308 auf, die mit der Kupplung 108 verriegelt werden kann.

Danach können die fertig gebackenen Backwaren 310 vom Bediener 2 mittels Ausbackschaufeln 6 von den Steinplatten 110 auf gelochte Auskühlbleche 304 des Ausbackwagens 300 gezogen werden.

Nach dem Wegfahren des Ausbackwagens 300 und dem Schließen der Tür 16 kann der Backofen 1 für einen weiteren Backvorgang gleich wieder beschickt bzw. aufgeheizt werden.

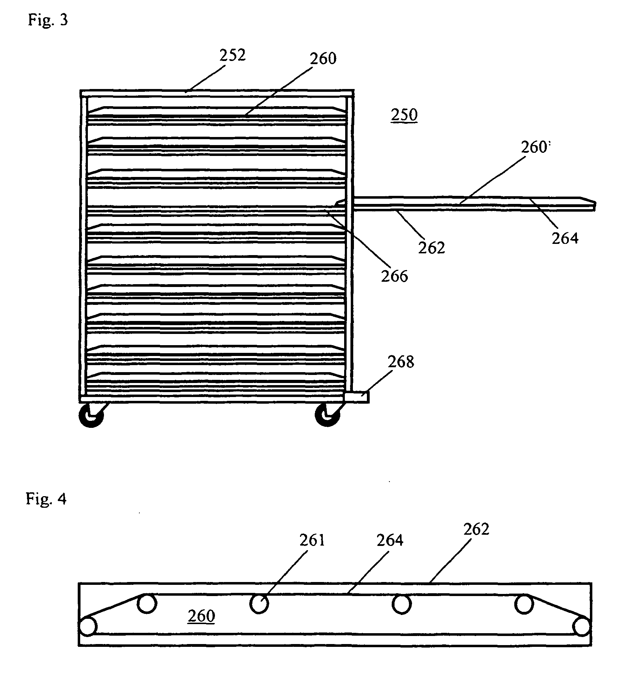

Das Einbringen der Teiglinge 210 in den Backofen 1 und auf die Steinplatten 110 lässt sich durch eine besondere Ausführungsform eines Abzieherwagens 250 vereinfachen, wie er in Fig. 3 dargestellt ist. Dieser Abzieherwagen 250 umfasst einzeln und horizontal ausziehbare Abziehapparate 260, die mittels eines Ausziehmechanismus 266 an einem Rahmen 252 des Abzieherwagens 250 befestigt sind. Fig. 3 zeigt einen nach rechts herausgezogenen Abziehapparat 260'.

Jeder Abziehapparat 260 weist ein Förderband 264 auf, das im Wesentlichen die gesamte Fläche des Abziehapparates 260 überspannt. Wie in Fig. 4 schematisch dargestellt, ist das Förderband 264 ein umlaufendes Band, das mittels Rollen oder Walzen 261 oder ähnlichem an einem Träger 262 befestigt ist und sich in Ausziehrichtung des Abziehapparates 260 bewegen kann. Da das Förderband 264 nur kurzzeitig den hohen Temperaturen im Backraum 14 widerstehen muss, ist es aus einem Tuchmaterial gefertigt.

Zum Einbringen der Teiglinge 210 in den Ofen, werden diese auf den Abziehapparaten 260 so abgelegt, wie sie später auf den Steinplatten 110 abgelegt und gebacken werden sollen. Zum Ablegen der Teiglinge 210 auf die Förderbänder 264 können die Abziehapparate 260 herausbewegt werden. Beim späteren Hineinbewegen des herausgezogenen Abziehapparates 260' bewegt sich das Förderband 264 relativ zum Abziehapparat 260' nicht.

Sind alle Abziehapparate 260 bzw. ihre Förderbänder 264 mit Teiglingen belegt, wird der Abzieherwagen 250 an den Ofen 1 herangefahren und and den Steinplattenwagen 100 angekuppelt. Dann wird jeder Abziehapparat 260 einzeln und komplett in den Backraum 14 hineinbewegt, so dass sie sich knapp über der entsprechenden Steinplatte 110 befindet. Es ist auch möglich alle Abziehapparate 260 gleichzeitig in den Backraum 14 hineinzubewegen, so dass der Beschickungsvorgang noch weiter verkürzt wird. Beim Hineinbewegen in den Backraum 14 bewegt sich das Förderband 264 ebenfalls nicht.

Ist der Abziehapparat 260' mit den Teiglingen 210 komplett in den Backraum 14 eingefahren, wird nun die Bewegung des Förderbandes 264 aktiviert, so dass es sich beim nachfolgenden Herausbewegen des Abziehapparates 260' synchron mit ihrer Bewegung bewegt und die Teiglinge 210 positionsrichtig auf der Steinplatte 110 ablegt. Die Teiglinge 210 befinden sich dann im Wesentlichen so auf der Steinplatte 110 wie sie auf dem Förderband 264 angeordnet waren. Zur Verkürzung des Beschickungsvorgangs ist es ebenfalls möglich alle Abziehapparate gleichzeitig aus dem Backraum 14 herauszufahren, so dass alle Steinplatten 110 gleichzeitig belegt werden und sich der Ofen nicht so stark auskühlt.

### Bezugszeichenliste

- 1: Radiatoren-Backofen
- 2: Bediener
- 4: Schieber
- 6: Ausbackschaufel
- 12: Gehäuse
- 14: Backraum
- 16: Tür
- 18: Thermoöl
- 20: Thermoölkreislauf
- 22: Heizaggregat
- 30: Radiatoren
- 100: Steinplattenwagen
- 102: Rahmen
- 104: Mittelstütze
- 106: Laufrollen
- 108: Kupplung
- 200: Abzieherwagen
- 202: Rahmen
- 204: Abziehapparate
- 208: Kupplung
- 210: Teiglinge
- 250: Auszieherwagen
- 252: Rahmen
- 260: Abziehapparate
- 261: Rollen oder Walzen
- 262: Träger
- 264: Förderband
- 266: Ausziehmechanismus
- 300: Ausbackwagen
- 302: Rahmen
- 304: Auskühlbleche
- 308: Kupplung

## Patentansprüche

1. Backofensystem aufweisend einen mit Thermoöl beheizten Radiatoren-Backofen (1) mit horizontal freitragend in den Backraum hineinragenden öldurchflossenen Radiatoren (30) und mindestens einen Steinplattenwagen (100) wobei der Steinplattenwagen aufweist:
a) einen in den Backraum des Radiatoren-Backofens (1) einfahrbaren Rahmen (102); **gekennzeichnet durch**
b) eine Mehrzahl von horizontal angeordneten Steinplatten (110) zur unmittelbaren Aufnahme des Backguts, die in dem Rahmen (102) befestigt sind;
wobei
c) die Steinplatten (110) unmittelbar über den öldurchflossenen Radiatoren (30) angeordnet sind, wenn der Steinplattenwagen (100)während des Backvorgangs in den Backraum (14) des Radiatoren-Backofens (1) eingefahren ist; wobei
d) die Steinplatten (110) auf solch einer Höhe im Rahmen (102) angeordnet sind, dass sie sich mit einem geringen Abstand von kleiner oder gleich 10mm, über den öldurchflossenen Radiatoren (30) befinden, so dass die Steinplatten (110) besonders schnell aufgewärmt werden und die direkte Wärmeleitung über die Steinplatten (110) auf das Backgut (210) auf die abgestrahlte Wärme von den über dem Backgut (210) befindlichen Radiatoren (30) angepasst ist.

2. Backofensystem gemäß Anspruch 1, wobei der Rahmen (102) die Steinplatten (110) umgibt.

3. Backofensystem gemäß einem der Ansprüche 1 oder 2, weiterhin aufweisend eine Kupplung (108), zum Ankuppeln von weiteren Wagen, insbesondere eines Abzieherwagens (200, 250) und eines Ausbackwagens (300).

4. Backofensystem gemäß einem der Ansprüche 1 - 3, weiterhin aufweisend mindestens einen Abzieherwagen (200, 250) zum Ablegen von Teiglingen (210) auf die Steinplatten (110) des Steinplattenwagen (100).

5. Backofensystem gemäß Anspruch 4, wobei der Abzieherwagen (200, 250) aufweist:
a) einen fahrbaren Rahmen (252); und
b) eine Mehrzahl von horizontal angeordneten Abziehapparaten (260); wobei
c) jeder Abziehapparat (260) einzeln oder mit anderen Abziehapparaten (260) zusammen horizontal aus dem Rahmen (252) herausbewegbar ist; und
d) ein Förderband (264) aufweist, um Teiglinge (210) direkt auf die Steinplatten (110) des Steinplattenwagens (100) abzulegen.

6. Backofensystem gemäß einem der Ansprüche 4 oder 5, wobei der Abzieherwagen (200, 250) weiterhin eine Kupplung (208, 268) aufweist, um den Abzieherwagen (200, 250) fluchtend an den Steinplattenwagen (100) heranzufahren und/oder mit ihm zu verrasten.

7. Backofensystem gemäß einem der Ansprüche 1 - 6, weiterhin aufweisend mindestens einen Ausbackwagen (300) zum Aufnehmen des gebackenen Backgutes (310), wobei der Ausbackwagen (300) eine Kupplung (308) aufweist, um den Ausbackwagen (300) fluchtend an den Steinplattenwagen (100) heranzufahren und/oder mit ihm zu verrasten.

## Claims

1. Backing oven system comprising a thermo-oil-heated radiator backing oven (1) having horizontally free-cantilevered radiators (30) that extend into the backing space and that are flown through by oil and at least a stone plate cart (100) wherein the stone plate cart comprises:
a) a frame (102) which can be rolled into the backing space of the radiator backing oven (1); **characterized by**
b) a plurality of horizontally arranged stone plates (110) for directly receiving the backing goods, wherein the stone plates are connected within the frame (102); wherein
c) the stone plates (110) are arranged immediately above the radiators (30) flown through by oil, when the stone plate cart (100) during the backing process is rolled into the backing space (14) of the radiator backing oven (1); wherein
d) the stone plates (110) are arranged at such a height in the frame (102) that they are located with small distance of smaller or equal 10 mm above the radiators (30) flown through by oil, such that the stone plates (110) are heated up particularly fast and the direct conduction of heat via the stone plates (110) to the backing goods (210) is adapted to the radiated heat of the radiators (30) arranged above the backing goods (210).

2. Backing oven system according claim 1, wherein the frame (102) surrounds the stone plates (110).

3. Backing oven system according to one of the claims 1 or 2, further comprising a coupling element (108) for coupling of further carts, particularly a goods receiving cart (200, 250) and a cooling-down cart (300).

4. Backing oven system according to one of the claims 1 - 3, further comprising at least one goods receiving cart (200, 250) for the positioning of raw goods (210) onto the stone plates (110) of the stone plate cart (100).

5. Backing oven system according claim 4, wherein the goods receiving cart (200, 250) comprises:
a) a rollable frame (252); and
b) a plurality of horizontally arranged goods positioning apparatuses (260); wherein
c) each goods positioning apparatus (260) can be moved individually or together with other goods positioning apparatuses (260) horizontally out of the frame (252); and
d) comprises a conveyor band (264), to position raw goods (210) directly onto the stone plates (110) of the stone plate cart (100).

6. Backing oven systems according to one of the claims 4 or 5, wherein the goods receiving cart (200, 250) further comprises a coupling element (208, 268), in order to position the goods receiving cart (200, 250) in line with the stone plate cart (100) and/or to lock the goods receiving cart (200, 250) with the stone plate cart (100).

7. Backing oven system according to one of the claims 1 - 6, further comprising at least one cooling-down cart (300) for receiving of the backed goods (310) wherein the cooling-down cart (300) comprises a coupling element (308) to position the cooling-down cart (300) in line with the stone plate cart (100) and / or to lock the cooling-down cart (300) with the stone plate cart (100).

## Revendications

1. Système de four de cuisson comportant un four de cuisson (1) à radiateurs chauffé par de l'huile thermique et muni de radiateurs (30) pénétrant horizontalement en porte-à-faux dans la chambre de cuisson et traversés par de l'huile, et comportant au moins un chariot (100) à dalles en pierre, le chariot à dalles comprenant :
a) un cadre (102) rétractable dans la chambre de cuisson du four de cuisson (1) à radiateurs ; **caractérisé par**
b) une pluralité de dalles en pierre (110) disposées horizontalement pour recevoir directement les produits à faire cuire, lesquelles sont fixées dans le cadre (102) ;
dans lequel
c) les dalles (110) sont agencées directement au-dessus des radiateurs (30) traversés par l'huile lorsque le chariot (100) à dalles est introduit dans la chambre de cuisson (14) du four de cuisson (1) à radiateurs pendant l'opération de cuisson ; et dans lequel
d) les dalles (110) sont agencées dans le cadre (102) à une hauteur telle qu'elles se trouvent à une faible distance inférieure ou égale à 10 mm au-dessus des radiateurs (30) traversés par l'huile, de sorte que les dalles (110) se chauffent particulièrement vite et que la conduction thermique directe par les dalles (110) vers les produits (210) à faire cuire est adaptée à la chaleur dégagée par les radiateurs (30) situés au-dessus des produits (210) à faire cuire.

2. Système de four de cuisson selon la revendication 1, dans lequel le cadre (102) entoure les dalles (110).

3. Système de four de cuisson selon l'une des revendications 1 ou 2, comprenant en outre un accouplement (108) pour accoupler d'autres chariots, en particulier un chariot d'enfournement (200, 250) et un chariot de défournement (300).

4. Système de four de cuisson selon l'une des revendications 1 à 3, comprenant en outre au moins un chariot d'enfournement (200, 250) pour déposer des pâtons (210) sur les dalles (110) du chariot (100) à dalles.

5. Système de four de cuisson selon la revendication 4, dans lequel le chariot d'enfournement (200, 250) comprend :
a) un cadre roulant (252) ; et
b) une pluralité d'appareils d'enfournement (260) disposés horizontalement ; dans lequel
c) chaque appareil d'enfournement (260) est capable de sortir horizontalement hors du cadre (252) soit individuellement soit ensemble avec d'autres appareils d'enfournement (260) ; et
d) comprend une bande transporteuse (264) pour déposer des pâtons (210) directement sur les dalles (110) du chariot (100) à dalles.

6. Système de four de cuisson selon l'une des revendications 4 ou 5, dans lequel le chariot d'enfournement (200, 250) comprend en outre un accouplement (208, 268) pour rapprocher le chariot d'enfournement (200, 250) en alignement vers le chariot (100) à dalles et/ou pour l'enclencher avec ce dernier.

7. Système de four de cuisson selon l'une des revendications 1 à 6, comprenant en outre au moins un chariot de défournement (300) pour recevoir les produits cuits (310), le chariot de défournement (300) présentant un accouplement (308) pour rapprocher le chariot de défournement (300) en alignement vers le chariot (100) à dalles et/ou pour l'enclencher avec ce dernier.
